# EUROPÄISCHE PATENTSCHRIFT

(11) **EP 0 388 391 B1**
(45) Veröffentlichungstag und Bekanntmachung des Hinweises auf die Patenterteilung: **22.12.1993**
(21) Anmeldenummer: 90890019.4
(22) Anmeldetag: 30.01.1990
(51) Int. Cl.: C04B 41/71

(54) **Verfahren zum Imprägnieren von Zementprodukten sowie nach diesem Verfahren hergestellte Produkte**
Method of impregnating cement products, and products produced thereby
Méthode pour imprégner les produits de ciment et produits ainsi fabriqués

(30) Priorität: 08.03.1989 AT 522/89
(43) Veröffentlichungstag der Anmeldung: 19.09.1990
(73) Patentinhaber: Eternit-Werke Ludwig Hatschek AG, A-4840 Vöcklabruck (AT); REDCO N.V., 1880 Kapelle op den Bos (BE); ETEX, F-75008 Paris (FR); ETERNIT AG, CH-8867 Niederurnen (CH)
(72) Erfinder: Miko, Hans-Jürgen, Dipl.-Ing., A-4813 Altmünster (AT); Kirchmayr, Karl, Dipl.-Ing., A-4840 Vöcklabruck (AT); Ernecker, Günter, A-4813 Altmünster (AT)
(74) Vertreter: Collin, Hans, Dipl.-Ing. Dr.

(56) Entgegenhaltungen:
- EP-A- 0 330 499
- DE-A- 1 057 007
- DE-A- 3 621 656
- GB-A- 753 528
- US-A- 1 970 857
- US-A- 2 275 272

## Beschreibung

Die Erfindung betrifft ein Verfahren zum Impragnieren von Zementprodukten, insbesondere Faserzementprodukten, vor deren Abbinden, sowie nach diesem Verfahren hergestellte Produkte. Vorzugsweise handelt es sich dabei um nach dem Formen, insbesondere unter Wärmeeinwirkung, gepreßte Produkte.

Bei hydraulisch gebundenen Produkten, die hier als Zementprodukte bezeichnet werden, insbesondere bei Faserzementprodukten, treten unter bestimmten Verhältnissen Ausblühungen auf. Ausblühungen sind im wesentlichen Ausscheidungen von Salzen auf Ziegel- und Natursteinmauerwerk, auf Beton, Mörtel, Steinholz oder Formkörpern aus Faserzement. Sie werden durch die Wanderung von im Baustoff enthaltenen, wasserlöslichen Salzen an dessen Oberfläche und dem darauffolgenden Verdunsten des Transportwassers hervorgerufen. Meistens tritt noch eine chemische Reaktion ein, wodurch die Ausblühungen unlöslich in Wasser werden. Ihre chemische Zusammensetzung ist von der Art des Baustoffs abhängig. Bei Mauerziegeln können Ausscheidungen von Gips vorkommen, entstanden aus Natriumsulfat von Ziegel und Kalk vom Fugenmörtel. Im Falle von der Witterung ausgesetzten Baustoffen, die ganz oder nur teilweise aus hydratisierten Erdalkalisilikaten bestehen, kann lösliche Kalziumhydroxid mit Wasser an die Oberfläche gelangen, wo es durch das Kohlendioxid der Luft zu sehr schwer löslichem, weißem Kalziumkarbonat umgeformt wird.

In den allermeisten Fällen beeinträchtigen Ausblühungen nicht die Qualität, wohl aber den Aspekt der Baustoffe beträchtlich. Besonders bei färbigen Baustoffen ist das Auftreten von Ausblühungen äußerst störend, weil schon geringe Salzmengen die Farbe des Baustoffes überdecken und häßliche weiße Flecken bilden. Die geringe Löslichkeit der Ausblühungen in Wasser und ihre gute Haftung am Untergrund können das Aussehen von Bauwerken für lange Zeit sehr nachteilig verändern.

Zur Verhinderung des Auftretens von Ausblühungen auf Faserzementprodukten mit einer ca. 0,1 - 1,5 mm dicken zementgebundenen Farbschicht an der Oberfläche (Sichtfläche) sind schon einige Verfahren bekannt. Zur Vermeidung derartiger Ausblühungen wurde z.B. für die dünne Farbschicht anstelle von Portland-Zement, der das Bindemittel der ungefärbten Grundplatte ist, Aluminat-Zement verwendet. Damit konnten hinsichtlich des Auftretens von Ausblühungen Verbesserungen erzielt werden.

Eine andere Möglichkeit, Ausblühungen zu verhindern, besteht darin, eine Deckschicht aus eingefärbtem Portland-Zement auf Faserzementplatten aufzubringen. In diesem Falle ist aber ein zusätzlicher Anstrich der Oberfläche notwendig, um zu ausblühfreien Produkten zu gelangen. Dieser weitere Anstrich kann jedoch nicht im Zuge des Produktionsprozesses, sondern erst aufgebracht werden, wenn der Zement in der Deckschicht eine gewisse Festigkeit erreicht hat, wodurch eine nachträgliche, kostenaufwendige, zusätzliche Bearbeitung erforderlich ist.

Seitens der Anmelderin ist bereits vorgeschlagen worden, auf Zementprodukte, insbesondere Faserzementprodukte, vor deren Abbinden und insbesondere vor deren Pressen eine Paraffindispersion aufzubringen, um deren Oberfläche abzudichten.

Es hat sich dabei herausgestellt, daß auch mit dieser Paraffinabdichtung eine vollständige Unterdrückung von Ausblühungen schwierig ist, besonders deswegen, weil es notwendig ist, dazu verschiedene Herstellungsparameter aufeinander abzustimmen, z.B. die Abbindetemperatur konstantzuhalten und/oder die Zusammensetzung der Streuschicht, falls vorhanden, sowie die Wachskonzentration bzw. -art zu variieren.

Es sind Fälle aufgetreten, wo so behandelte Faserzementplatten das Paraffin infolge der Abbindewärme des Zements so weit eingesaugt haben, daß die Ausbildung einer angestrebten durchgehenden Oberflächenschicht auf den Platten unterbleibt und, wenn auch geringfügige, Ausblühungen auftraten.

Auf der anderen Seite bringt aber das Aufbringen großer Paraffinmengen mit sich, daß ein Teil des Wachses im Zuge der Produktion durch Abrinnen verlorengeht und somit einerseits das Abwasser belastet wird und anderseits auch die Preßbleche stark verschmutzt werden, die dann besonders gereinigt werden müssen. Dies ist insbesondere dann zu beobachten, wenn das Wachs aufgesprüht wird.

Es bestand somit die Aufgabe, das bereits vorgeschlagene Wachsimprägnierungsverfahren grundlegend zu verbessern, so daß die bisher nötige sorgfältige Optimierung der Behandlungsparameter nicht mehr die bisherige Bedeutung hat und die erwähnten Schwierigkeiten nicht mehr auftreten.

Dies wird erfindungsgemäß durch eine Vorimprägnierung (Primen) der Produkte mit Kunststoffen vor dem Aufbringen des Wachses erzielt.

Demgemäß ist das erfindungsgemäße Verfahren zum Imprägnieren von Zementprodukten, insbesondere Faserzementprodukten, vor deren Abbinden vor allem dadurch gekennzeichnet, daß auf die formnassen Produkte eine wässerige Kunststoffdispersion und im Anschluß daran eine wässerige Wachsdispersion, insbesondere eine Paraffindispersion, aufgebracht wird.

Überraschenderweise wurde gefunden, daß es möglich ist, die Wachsdispersion unmittelbar anschließend an das Aufbringen der Kunststoffdispersion aufzubringen, ohne daß ein Vermischen der Aufträge eintritt, so daß die Oberflächenschicht nach wie vor lediglich aus Wachs besteht.

Dies dürfte auf die ebenfalls überraschende Tatsache zurückzuführen sein, daß Kunststoffdispersionen viel schneller in die Oberschicht von Zementprodukten eindringen als Wachsdispersionen.

In der Praxis werden gute Ergebnisse erzielt, wenn die Wachsdispersion innerhalb von etwa 2 min nach dem Aufbringen der Kunststoffdispersion aufgebracht wird.

Günstig ist es, zumindest die Kunststoffdispersion aufzuwalzen; bevorzugt werden sowohl Kunststoffdispersion als auch Wachsdispersion über Walzen aufgebracht. Als Kunststoffe werden vor allem filmbildende Kunststoffe, insbesondere thermoplastische Kunststoffe, eingesetzt, die vorzugsweise Tieftemperaturplastizität aufweisen.

Bevorzugt werden in der Praxis Kunststoffe aus der Gruppe enthaltend Acrylharze, Polyurethanharze und Epoxyharze.

Es wird vorteilhaft soviel Kunststoffdispersion aufgebracht, daß 5 bis 60 g Kunststoff pro m² Oberfläche vorliegen. Dazu werden vor allem Kunststoffdispersionen mit einem Kunststoffgehalt bis zu etwa 60 Masse-% eingesetzt.

Es können pigmenthaltige Kunststoffdispersionen eingesetzt werden, die insbesondere bis zu etwa 5 Masse-% Pigmente, z.B. Fe0, bezogen auf den Kunststoffanteil, enthalten.

Als Wachsdispersionen werden insbesondere solche eingesetzt, deren Wachsanteil einen Erweichungspunkt im Bereich von 65 bis 100°C, insbesondere von mindestens 80°C, aufweist. Insbesondere werden dabei Paraffindispersionen eingesetzt, jedoch sind auch andere Wachse verwendbar.

Bevorzugt werden Wachsdispersionen eingesetzt, deren Wachsanteil zumindestens im wesentlichen unverseifbar ist.

Insbesondere werden die Wachsdispersionen in einer Menge von 10 bis 60 g, vorzugsweise 12 bis 40 g, insbesondere 15 bis 35 g, Wachs pro m² Oberfläche aufgebracht, wobei vorteilhaft Wachsdispersionen zur Anwendung kommen, die einen Wachsanteil von 25 bis 65 Masse-%, vorzugsweise 30 bis 55 Masse-%, insbesondere 35 bis 50 Masse-%, aufweisen.

Bevorzugt werden weiterhin nichtionogene Wachsdispersionen eingesetzt.

Insbesondere kommen Wachsdispersionen zum Einsatz, deren Viskosität bei 25°C zwischen 40 und 100 cP, vorzugsweise um bzw. bei 50 cP, liegt.

Vorteilhaft sind Wachsdispersionen, deren Dichte bzw. die Dichte von deren Wachsanteil bei 15°C zwischen 0,8 und 0,95 g/cm³, insbesondere bei etwa 0,88 g/cm³, liegt.

Der pH-Wert der eingesetzten Wachsdispersionen ist nicht besonders kritisch, liegt aber bevorzugt bei 5 bis 8.

Die Wachsdispersionen können auch pigmentiert werden, wobei insbesondere ein Pigmentanteil von bis zu 5 Masse-%, bezogen auf den Wachsanteil, vorliegen kann.

Bevorzugt wird jedoch lediglich die Kunststoffdispersion pigmentiert, wobei die Farben durch die ungefärbte Wachsschicht besonders gut zur Geltung kommen.

Die Erfindung wird nachstehend an Hand eines Ausführungsbeispiels näher beschrieben.

Aus einer Faserzementsuspension werden die festen Inhaltsstoffe über Siebzylinder als Vlies abgenommen und mittels einer Siebbahn auf eine rotierende Formatwalze übertragen. Nach Erreichen der gewünschten Schichtdicke wird das Vlies entlang einer Walzenerzeugenden aufgeschnitten und die dadurch erhaltene rechteckige Vliesplatte in eine Stanzvorrichtung gefahren, wo aus der Platte die einzelnen Dachplatten ausgestanzt werden. Die nebeneinanderliegenden Dachplattenrohlinge werden mittels eines Saugers auf ein Preßblech übertragen und in die erste Beschichtungsstation gefahren, wo sie mit einer Kunststoffdispersion bewalzt werden. Anschließend werden sie in einer zweiten Beschichtungsstation, die unmittelbar an die erste Beschichtungsstation anschließt, mit einer Wachsdispersion bewalzt. Die einzelnen Preßbleche werden sodann übereinandergestapelt, so daß jeweils die Oberseite der Dachplatten, die eine Wachsbeschichtung trägt, an der Unterseite des darüberliegenden Preßblechs anliegt. Der Plattenstapel wird in eine Presse eingefahren und dort verpreßt, wobei der hydraulische Abbindevorgang soweit fortschreitet, daß die Dachplatten formstabil sind. Anschließend wird der Plattenstapel vereinzelt, wobei die Wachsbeschichtung der Dachplatten eine saubere Trennung ermöglicht. Die Dachplatten werden von den Preßblechen abgenommen (ausgeblecht) und gehen zur Lagerung; die Preßbleche werden gereinigt, gegebenenfalls vorgewärmt und gehen zur erneuten Belegung mit Dachplattenrohlingen zurück.

Das Verpressen erfolgt vorzugsweise bei einer Temperatur zwischen 40 und 90°C.

Vorzugsweise werden die beladenen Preßbleche einfach unter jeweils einer heb- und senkbaren Beschichtungswalze durchgefahren; das Aufdosieren der Kunststoff- bzw. Wachsdispersion auf die jeweilige Beschichtungswalze kann in üblicher Weise erfolgen, z.B. über eine Schlitzdüse oder über eine Hilfswalze, die in eine derartige Dispersion eintaucht und an der Beschichtungswalze anliegt. Die Beschichtungswalzen können eine starre oder nachgiebige Oberfläche aufweisen, z.B. einen Gummimantel aufweisen.

Gegebenenfalls kann auch ein Sprühauftrag erfolgen; dies ist aber nicht bevorzugt, da damit eine Verschmutzung der Preßblechränder einhergeht.

Es wurde gefunden, daß mit dem erfindungsgemäßen Verfahren nicht nur eine ausgezeichnete Dauerimprägnierung erzielt wird, die Ausblühungen sicher verhindert, sondern es wurde auch gefunden, daß keinerlei Kleben beim Vereinzeln des Plattenstapels auftritt, auch wenn sehr wenig Wachs aufgetragen wird, da das Wachs praktisch vollständig an der vorher mit Kunststoff abgedichteten Oberfläche bleibt.

Das erfindungsgemäße Verfahren läßt sich mit Vorteil generell bei frisch geformten "grünen" Zementprodukten anwenden; insbesondere eignet es sich für die Herstellung von Dachplatten und Fassadenplatten, die auch in bekannter Weise mit einer Streuschicht versehen sein können.

Gegenstand der Erfindung sind somit auch nach dem erfindungsgemäßen Verfahren hergestellte Zementprodukte, insbesondere Faserzementprodukte, mit einer Oberflächenimprägnierung aus Wachs, unterhalb der eine Kunststoffimpragnierung aufgebracht ist.

## Patentansprüche

1. Verfahren zum Imprägnieren von Zementprodukten, insbesondere Faserzementprodukten, vor deren Abbinden, dadurch gekennzeichnet, daß auf die formnassen Produkte eine wässerige Kunststoffdispersion und im Anschluß daran ohne weitere Oberflächenbehandlung eine wässerige Wachsdispersion, insbesondere eine Paraffindispersion, aufgebracht wird.

2. Verfahren nach Anspruch 1, dadurch gekennzeichnet, daß die Wachsdispersion innerhalb von etwa 2 Minuten nach dem Aufbringen der Kunststoffdispersion aufgebracht wird.

3. Verfahren nach einem der Ansprüche 1 oder 2, dadurch gekennzeichnet, daß die Kunststoffdispersion aufgewalzt wird.

4. Verfahren nach einem der Ansprüche 1 bis 3, dadurch gekennzeichnet, daß die Wachsdispersion aufgewalzt wird.

5. Verfahren nach einem der Ansprüche 1 bis 4, dadurch gekennzeichnet, daß eine Dispersion eines filmbildenden Kunststoffs aufgebracht wird.

6. Verfahren nach einem der Ansprüche 1 bis 5, dadurch gekennzeichnet, daß eine Dispersion mindestens eines thermoplastischen Kunststoffs aufgebracht wird.

7. Verfahren nach Anspruch 6, dadurch gekennzeichnet, daß eine Dispersion mindestens eines Kunststoffs mit Tieftemperaturplastizität aufgebracht wird.

8. Verfahren nach einem der Ansprüche 1 bis 7, dadurch gekennzeichnet, daß eine Dispersion mindestens eines Kunststoffs ausgewählt aus der Gruppe enthaltend Acrylharze, Polyurethanharze und Epoxyharze aufgebracht wird.

9. Verfahren nach einem der Ansprüche 1 bis 8, dadurch gekennzeichnet, daß die Kunststoffdispersion in einer Menge von 20 bis 60 g Kunststoff pro m² Oberfläche aufgebracht wird.

10. Verfahren nach einem der Ansprüche 1 bis 8, dadurch gekennzeichnet, daß eine Kunststoffdispersion mit einem Kunststoffgehalt von bis zu etwa 60 Masse-% aufgebracht wird.

11. Verfahren nach einem der Ansprüche 1 bis 10, dadurch gekennzeichnet, daß eine pigmenthaltige Kunststoffdispersion aufgebracht wird.

12. Verfahren nach Anspruch 11, dadurch gekennzeichnet, daß eine Kunststoffdispersion mit einem Pigmentgehalt von bis zu 5 Masse-%, bezogen auf den Kunststoffanteil, aufgebracht wird.

13. Verfahren nach einem der Ansprüche 1 bis 12, dadurch gekennzeichnet, daß eine Wachsdispersion, deren Wachsanteil einen Erweichungspunkt im Bereich von 65 bis 100°C, insbesondere von mindestens 80°C, aufweist, aufgebracht wird.

14. Verfahren nach einem der Ansprüche 1 bis 13, dadurch gekennzeichnet, daß eine Wachsdispersion, deren Wachsanteil zumindestens im wesentlichen unverseifbar ist, aufgebracht wird.

15. Verfahren nach einem der Ansprüche 1 bis 14, dadurch gekennzeichnet, daß die Wachsdispersion in einer Menge von 10 bis 60 g, vorzugsweise 12 bis 40 g, insbesondere 15 bis 35 g, Wachs pro m² Oberfläche aufgebracht wird.

16. Verfahren nach einem der Ansprüche 1 bis 15, dadurch gekennzeichnet, daß eine Wachsdispersion, die einen Wachsanteil von 25 bis 65 Masse-%, vorzugsweise 30 bis 55 Masse-%, insbesondere 35 bis 50 Masse-%, aufweist, aufgebracht wird.

17. Verfahren nach einem der Ansprüche 1 bis 16, dadurch gekennzeichnet, daß eine nichtionogene Wachsdispersion aufgebracht wird.

18. Verfahren nach einem der Ansprüche 1 bis 17, dadurch gekennzeichnet, daß eine Wachsdispersion, deren Viskosität bei 25°C zwischen 40 und 100 cP, vorzugsweise um bzw. bei 50 cP, liegt, aufgebracht wird.

19. Verfahren nach einem der Ansprüche 1 bis 18, dadurch gekennzeichnet, daß eine Wachsdispersion, deren Dichte bzw. die Dichte von deren Wachsanteil bei 15°C zwischen 0,8 und 0,95 g/cm³, insbesondere bei etwa 0,88 g/cm³, liegt, aufgebracht wird.

20. Verfahren nach einem der Ansprüche 1 bis 19, dadurch gekennzeichnet, daß eine Wachsdispersion mit einem pH-Wert zwischen 5 und 8 aufgebracht wird.

21. Verfahren nach einem der Ansprüche 1 bis 20, dadurch gekennzeichnet, daß eine pigmenthaltige Wachsdispersion aufgebracht wird.

22. Verfahren nach Anspruch 21, dadurch gekennzeichnet, daß eine Wachsdispersion mit einem Pigmentgehalt von bis zu 5 Masse-%, bezogen auf den Wachsanteil, aufgebracht wird.

23. Zementprodukt, insbesondere Faserzementprodukt, mit einer Oberflächenimprägnierung aus Wachs, unterhalb der eine Kunststoffimprägnierung angeordnet ist, hergestellt nach dem Verfahren nach einem der Ansprüche 1 bis 22.

## Claims

1. A method of impregnating concrete products, in particular fiber concrete products, prior to their setting, characterized in that an aqueous plastics material dispersion is applied to the products still wet from molding and that subsequently and without any further surface treatment, an aqueous wax dispersion, in particular a paraffin dispersion, is applied to the products.

2. The method according to claim 1, characterized in that the wax dispersion is applied within about two minutes after the application of the plastics material dispersion.

3. The method according to claim 1 or 2, characterized in that the plastics material dispersion is rolled on.

4. The method according to any one of the claims 1 to 3, characterized in that the wax dispersion is rolled on.

5. The method according to any one of the claims 1 to 4, characterized in that a dispersion of a film-forming plastics material is applied.

6. The method according to any one of the claims 1 to 5, characterized in that a dispersion of at least one thermoplastic plastics material is applied.

7. The method according to claim 6, characterized in that a dispersion of at least one plastics material having low-temperature plasticity is applied.

8. The method according to any one of the claims 1 to 7, characterized in that a dispersion of at least one plastics material selected from the group comprising acrylic resins, polyurethane resins and epoxy resins is applied.

9. The method according to any one of the claims 1 to 8, characterized in that the plastics material dispersion is applied in an amount of from 20 to 60 g of plastics material per m² of surface area.

10. The method according to any one of the claims 1 to 8, characterized in that a plastics material dispersion with a plastics material content of up to about 60 percent by weight is applied.

11. The method according to any one of the claims 1 to 10, characterized in that a plastics material dispersion containing pigments is applied.

12. The method according to claim 11, characterized in that a plastics material dispersion with a pigment content of up to 5 percent by weight based on the plastics material component is applied.

13. The method according to any one of the claims 1 to 12, characterized in that a wax dispersion whose wax component has a softening point in the range of from 65 to 100°C, in particular of at least 80°C, is applied.

14. The method according to any one of the claims 1 to 13, characterized in that a wax dispersion whose wax component is at least substantially unsaponifiable is applied.

15. The method according to any one of the claims 1 to 14, characterized in that the wax dispersion is applied in an amount of from 10 to 60 g, preferably 12 to 40 g, in particular 15 to 35 g, of wax per m² of surface area.

16. The process according to any one of the claims 1 to 15, characterized in that a wax dispersion having a wax component of from 25 to 65 percent by weight, preferably of from 30 to 55 percent by weight, in particular of from 35 to 50 percent by weight, is applied.

17. The method according to any one of the claims 1 to 16, characterized in that a non-ionogenic wax dispersion is applied.

18. The method according to any one of the claims 1 to 17, characterized in that a wax dispersion whose viscosity at 25°C ranges between 40 and 100 cP, preferably around or at 50 cP, is applied.

19. The method according to any one of the claims 1 to 18, characterized in that a wax dispersion whose density or the density of its wax component at 15°C ranges between 0.8 and 0.95 g/cm³, in particular at about 0.88 g/cm³, is applied.

20. The method according to any one of the claims 1 to 19, characterized in that a wax dispersion having a pH value between 5 and 8 is applied.

21. The method according to any one of the claims 1 to 20, characterized in that a wax dispersion containing pigments is applied.

22. The method according to claim 21, characterized in that a wax dispersion of a pigment content of up to 5 percent by weight based on the wax component is applied.

23. Concrete product, in particular fiber concrete product, having a surface impregnation of wax underneath of which a plastics material impregnation is arranged, obtained according to the method according to any one of the claims 1 to 22.

## Revendications

1. Procédé d'imprégnation de produits en ciment, en particulier de produits en fibrociment, avant leur prise, caractérisé en ce qu'une dispersion aqueuse de matière plastique est appliquée sur les produits encore humides du moule et ensuite, sans outre traitement de surface, une dispersion aqueuse de cire, en particulier une dispersion de paraffine, est appliquée.

2. Procédé selon la revendication 1, caractérisé en ce que la dispersion de cire est appliquée en environ deux minutes suivant l'application de la dispersion de matière plastique.

3. Procédé selon la revendication 1 ou 2, caractérisé en ce que la dispersion de matière plastique est laminée sur les produits.

4. Procédé selon une des revendications 1 à 3, caractérisé en ce que la dispersion de cire est laminée sur les produits.

5. Procédé selon une des revendications 1 à 4, caractérisé en ce qu'une dispersion d'une matière plastique filmogène est appliquée.

6. Procécé selon une des revendications 1 à 5, caractérisé en ce qu'une dispersion d'au moins une matière thermoplastique est appliquée.

7. Procédé selon la revendication 6, caractérisé en ce qu'au moins une matière plastique de plasticité à basse température est appliquée.

8. Procédé selon une des revendications 1 à 7, caractérisé en ce qu'une dispersion d'au moins une matière plastique choisie du groupe comprenant les résines acryliques, les résines polyuréthaniques et les résines époxy est appliquée.

9. Procédé selon une des revendications 1 à 8, caractérisé en ce que la dispersion de matière plastique est appliquée à une quantité de 20 à 60 g de matière plastique par m² de surface.

10. Procédé selon une des revendications 1 à 8, caractérisé en ce qu'une dispersion de matière plastique d'un contenu en matière plastique jusqu'à environ 60 % en poids est appliquée.

11. Procédé selon une des revendications 1 à 10, caractérisé en ce qu'une dispersion de matière plastique contenant des pigments est appliquée.

12. Procédé selon la revendication 11, caractérisé en ce qu'une dispersion de matières plastiques avec un contenu en pigments de jusqu'à 5 % en poids basé sur la quote-part de matière plastique est appliquée.

13. Procédé selon une des revendications 1 à 12, caractérisé en ce qu'une dispersion de cire dont le cire a un point de ramollissement dans la gamme de 65 à 100°C, en particulier d'au moins 80°C, est appliquée.

14. Procédé selon une des revendications 1 à 13, caractérisé en ce qu'une dispersion de cire dont le cire est au moins essentiellement insaponifiable est appliquée.

15. Procédé selon une des revendications 1 à 14, caractérisé en ce que la dispersion de cire est appliquée à une quantité de 10 à 60 g, de préférence de 12 à 40 g, en particulier de 15 à 35 g, de cire par m² de surface.

16. Procédé selon une des revendications 1 à 15, caractérisé en ce qu'une dispersion de cire dont la quote-part de cire est de 25 à 65 % en poids, de préférence de 30 à 55 % en poids, en particulier de 35 à 50 % en poids, est appliquée.

17. Procédé selon une des revendications 1 à 16, caractérisé en ce qu'une dispersion de cire non-ionique est appliquée.

18. Procédé selon une des revendications 1 à 17, caractérisé en ce qu'une dispersion de cire dont la viscosité à 25°C est de 40 à 100 cP, de préférence environ ou de 50 cP, est appliquée.

19. Procédé selon une des revendications 1 à 18, caractérisé en ce qu'une dispersion de cire dont la densité ou dont la densité de cire à 15°C est de 0,8 à 0,95 g/cm³, en particulier de 0,88 g/cm³ environ, est appliquée.

20. Procédé selon une des revendications 1 à 19, caractérisé en ce qu'une dispersion de cire d'un pH de 5 à 8 est appliquée.

21. Procédé selon une des revendications 1 à 20, caractérisé en ce qu'une dispersion de cire contenant des pigments est appliquée.

22. Procédé selon la revendication 21, caractérisé en ce qu'une dispersion de cire d'un contenu en pigment jusqu'a 5 % en poids basé sur la quote-part de cire est appliquée.

23. Produit de ciment, en particulier produit de fibrociment, pourvu d'une imprégnation de surface en cire sous laquelle une imprégnation en matière plastique est disposée, fabriqué selon le procédé selon une des revendications 1 à 22.
